# EUROPEAN PATENT APPLICATION

(11) **EP 4 566 920 A1**
(43) Date of publication of application: **11.06.2025**
(21) Application number: 23871611.2
(22) Date of filing: 25.08.2023
(51) Int. Cl.: B62D 21/02

(54) **DUMP TRUCK**

(30) Priority: 29.09.2022 JP 2022156839
(71) Applicant: Hitachi Construction Machinery Co., Ltd., Tokyo 110-0015 (JP)
(72) Inventor: WATAKA, Yuki, Tsuchiura-shi, Ibaraki 300-0013 (JP)
(74) Representative: Manitz Finsterwald Patent- und Rechtsanwaltspartnerschaft mbB
(86) International application number: PCT/JP2023/030643
(87) International publication number: WO 2024/070370

(57) **Abstract**

The vehicle body frame (14) of the dump truck (1) is equipped with a cab support part (28E) that supports the rear side part (9A) of the cab (9), a front support member (30) that is positioned between the vehicle body frame (14) and the cab (9) to support the front side part (9B) of the cab (9), and a reinforcement member (31) that connects the front support member (30) and the cab support part (28E) . The frame side bracket (29) provided on the cab support part (28E) and the reinforcement member side bracket (33) provided on the reinforcement member (31) are connected via a connecting pin (36), and a spherical bearing (34) is provided between the frame side bracket (29) and the connecting pin (36).

## Description

### TECHNICAL FIELD

This disclosure relates to dump trucks that are suitably used for transporting crushed stone and the like mined from, for example, mines.

### BACKGROUND ART

A dump truck for transporting crushed stone and the like mined from mines comprises a vehicle body frame to which wheels are attached, a vessel tiltably provided relative to the vehicle body frame, and a cab positioned at the front side of the vessel and provided on the vehicle body frame to define an operating room. The rear side part of the cab is supported by a cab support part provided on the vehicle body frame, and the front side part of the cab is supported by a front support member arranged at the front side of the vehicle body frame.

The front support member requires high strength because it bears the load from the heavy cab and is subjected to a large load due to vibrations when the dump truck is traveling. In contrast, a dump truck is disclosed (Patent Document 1) in which a reinforcement member is provided between the upper part of the front support member (building) and the vehicle body frame in an inclined state in the vertical direction (vehicle height direction) to enhance the strength of the front support member.

### PRIOR ART DOCUMENT

### PATENT DOCUMENT

Patent Document 1: Japanese Patent Laid-Open No. 2019-43481 A

### SUMMARY OF THE INVENTION

However, since dump trucks usually travel on rough roads (uneven ground) such as mines, the vehicle body frame undergoes torsional deformation during travel. Therefore, when a reinforcement member is provided between the front support member and the vehicle body frame as in Patent Document 1, the load due to the torsional deformation of the vehicle body frame acts on the connection part between the reinforcement member and the vehicle body frame, resulting in a decrease in the support strength of the cab.

In contrast, methods such as increasing the rigidity of the vehicle body frame to suppress torsional deformation, or enhancing the strength of the reinforcement member to increase the strength of the connection part between the reinforcement member and the vehicle body frame, can be considered. However, there is a problem that the weight of the vehicle body increases regardless of which method is adopted.

The purpose of the present invention is to provide a dump truck that can enhance the support strength of the cab without increasing the weight of the vehicle body.

The dump truck of the present invention includes a vehicle body frame to which wheels are attached and which extends in the longitudinal direction, a vessel that is tiltably mounted on the vehicle body frame for loading transported materials, and a cab located at the front side of the vessel, which is provided on the vehicle body frame to define the operating room. In the dump truck, the vehicle body frame is provided with a cab support part supporting the rear side part of the cab, a front support member arranged between the vehicle body frame and the cab to support the front side part of the cab, and a reinforcing member connecting the front support member and the cab support part. And a spherical bearing is provided at at least one of the connection points between the cab support and the reinforcement member, and between the front support member and the reinforcement member.

According to the present invention, the reinforcing member connecting the cab support part supporting the rear side part of the cab and the front support member supporting the front side part of the cab can reduce the load acting on the front support member during travel. Moreover, even if the vehicle body frame undergoes torsional deformation due to the dump truck traveling on uneven ground, the spherical bearing provided at least at one of the connection parts between the cab support part and the reinforcing member, and between the front support member and the reinforcing member, can absorb the torsional deformation of the vehicle body frame. This makes it possible to suppress the load due to the torsional deformation of the vehicle body frame from acting on the connection part between the cab support part and the reinforcing member, or between the front support member and the reinforcing member, thereby enhancing the support strength of the cab without increasing the weight of the vehicle body.

### BRIEF DESCRIPTION OF THE DRAWINGS

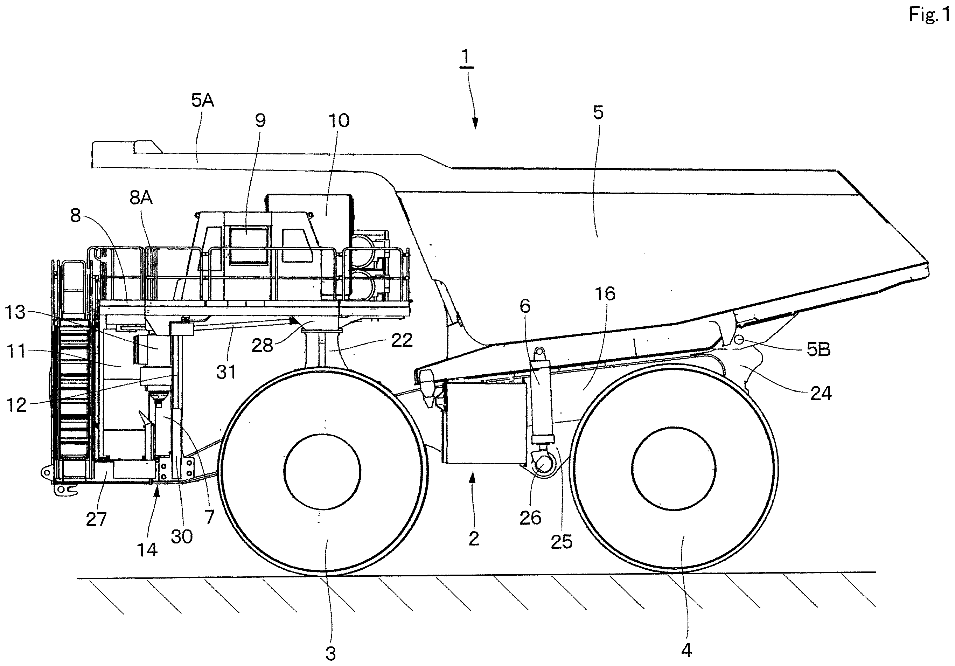

Fig. 1 is a left side view showing a dump truck according to an embodiment of the present invention.

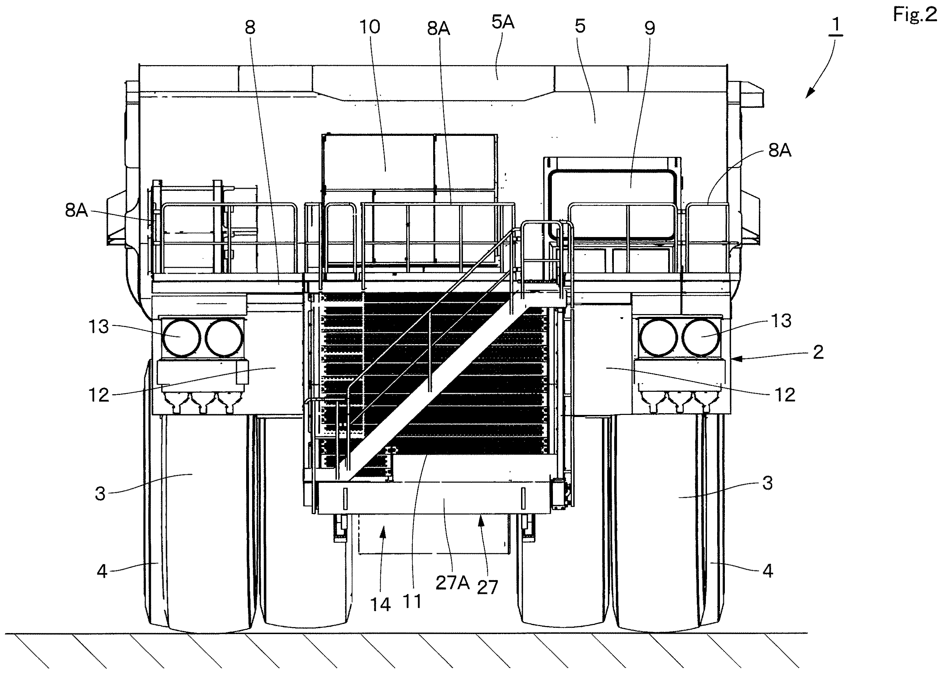

Fig. 2 is a front view of the dump truck.
Fig. 3 is a perspective view showing the vehicle body frame and the cab.
Fig. 4 is a perspective view showing the connection part between the cab support part and the reinforcing member of the vehicle body frame.
Fig. 5 is a left side view showing the connection part between the cab support part and the reinforcing member.
Fig. 6 is a cross-sectional view of the connection part between the cab support part and the reinforcing member as seen from the direction of arrow VI-VI in Fig. 5.

### MODE FOR CARRYING OUT THE INVENTION

Hereinafter, embodiments of the dump truck according to the present invention will be described in detail with reference to the accompanying drawings. In the embodiments, the traveling direction of the dump truck is described as the longitudinal direction, and the direction orthogonal to the traveling direction is described as the lateral direction.

In the figures, the dump truck 1 comprises a self-propelled vehicle body 2 equipped with left and right front wheels 3 and left and right rear wheels 4, and a vessel 5, described later, tiltably mounted on the vehicle body 2. The dump truck 1 transports materials such as crushed stone excavated from the mine by loading them onto the vessel 5. The vehicle body 2 of the dump truck 1 is configured to include a building 7, a deck 8, a cab 9, a vehicle body frame 14, and the like, which will be described later.

The left and right front wheels 3 are rotatably provided at the front side of the vehicle body 2, constituting steering wheels. The front wheels 3 are supported by the vehicle body frame 14 via a front wheel suspension (not shown), and vibrations transmitted from the front wheels 3 to the vehicle body 2 are mitigated. The left and right rear wheels 4 are rotatably provided at the rear side of the vehicle body 2 and are rotationally driven by a travel device (not shown) equipped with an electric motor. The travel device of the rear wheels 4 is supported by the vehicle body frame 14 via a rear wheel suspension (not shown), and vibrations transmitted from the rear wheels 4 to the vehicle body 2 are mitigated.

The vessel 5 is tiltably (undulatively) mounted on the vehicle body frame 14. The vessel 5 is formed as a large bottomed container for loading a large amount of minerals and the like excavated by, for example, a hydraulic excavator (not shown) . The rear bottom part of the vessel 5 is tiltably connected via a connecting pin 5B to left and right rear end brackets 24, which will be described later, provided on the vehicle body frame 14. At the front side of the vessel 5, an eave part 5A extending horizontally forward from the upper part is integrally provided. The eave part 5A of the vessel 5 extends to the front end side of the deck 8 while covering the cab 9 from above.

The hoist cylinder 6 is provided in pairs in the lateral direction between the vehicle body frame 14 and the vessel 5 (only the left side is shown) . The hoist cylinder 6 is composed of, for example, a hydraulic cylinder and tilts the front side of the vessel 5 up and down relative to the vehicle body frame 14**.** One end side (lower end side) of the hoist cylinder 6 is pivotally attached to a cylinder support shaft 26, which will be described later, and the other end side (upper end side) of the hoist cylinder 6 is pivotally attached to the lower surface side of the vessel 5. Therefore, by extending or retracting the hoist cylinder 6, the front side (eave part 5A side) of the vessel 5 rotates (moves up and down) in the vertical direction with the connecting pin 5B as a fulcrum. As a result, the vessel 5 tilts to a dumping position where the front side is lifted upward, allowing the discharge of the transported materials loaded on the vessel 5.

The building 7 is provided at the front side of the vehicle body 2. The building 7 is formed in a rectangular frame shape enclosed by left and right side plates and a top plate, defining a machine room for accommodating mounted equipment such as an engine, a generator, and a hydraulic pump (all not shown).

The deck 8 is positioned in front of the vessel 5 and is provided on the left support column 22, right support column 23, and the upper side of the building 7 of the vehicle body frame 14. The deck 8 is formed in an elongated rectangular flat plate shape in the lateral direction and is supported from below by an upper cross beam 28 and the building 7, which will be described later. The deck 8 is arranged above the left and right front wheels 3 and extends in the horizontal direction, with the cab 9, control cabinet 10, and the like mounted on the deck 8. In addition, the upper surface of the deck 8 serves as a flat passage surface for operators and the like to pass through, and the outer periphery of the deck 8 is surrounded by multiple handrails 8A.

The cab 9 is positioned at the front side of the vessel 5 and is provided on the vehicle body frame 14, covered from above by the eave part 5A. The cab 9 consists of a box body enclosed by a front face, rear face, left and right side faces, top face, and bottom face, defining an operating room for the operator of the dump truck 1 to get on and off. The rear side part 9A of the cab 9 is supported from below by the cab support part 28E of the upper cross beam 28, and the front side part 9B of the cab 9 is supported from below by a front support member 30, which will be described later. Inside the cab 9, there are provided a driver's seat, an accelerator pedal, a brake pedal, a steering handle, and multiple control levers (all not shown).

The radiator 11 is provided at the front end side of the vehicle body frame 14. The radiator 11 is arranged at the front side of the building 7 and cools the engine coolant and the like of an engine (not shown) housed in the machine room defined by the building 7. On both the left and right sides of the radiator 11, fenders 12 protruding in the lateral direction from the left and right side plates of the building 7 are provided. Each of these left and right fenders 12 is equipped with an air cleaner 13. The air cleaner 13 captures dust contained in the outside air at work sites such as mines and supplies clean air (intake air) to the engine.

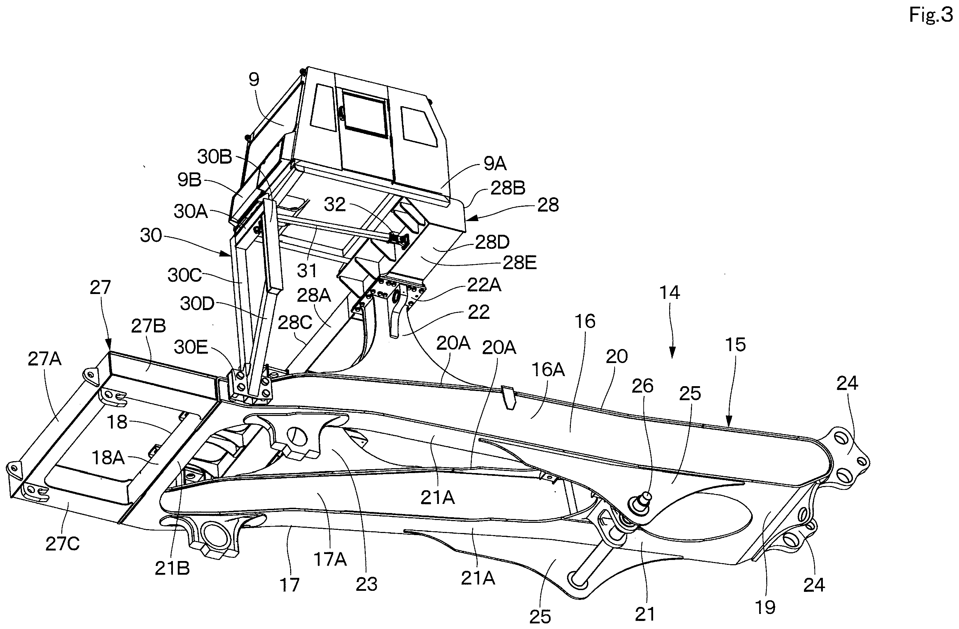

The vehicle body frame 14 serves as the base of the vehicle body 2 and constitutes a robust support structure. As shown in Fig. 3, the vehicle body frame 14 is configured to include a main frame 15 extending in the longitudinal direction and a front bumper 27 integrally fixed to the front side of the main frame 15. The main frame 15 is composed of a left frame 16, a right frame 17, a front frame 18, a rear frame 19, an upper plate 20, a lower plate 21, a left support column 22, a right support column 23, an upper cross beam 28, and the like.

The left frame 16 is positioned on the left side of the vehicle body frame 14 and extends in the longitudinal direction. The left frame 16 is composed of left and right side plates 16A facing each other in the lateral direction, an upper plate 20 closing the upper ends of the side plates 16A, and a lower plate 21 connecting the lower ends of the side plates 16A. The right frame 17 is positioned on the right side of the vehicle body frame 14 and extends in the longitudinal direction. The right frame 17 is composed of left and right side plates 17A facing each other in the lateral direction, an upper plate 20 closing the upper ends of the side plates 17A, and a lower plate 21 connecting the lower ends of the side plates 17A.

The front frame 18 connects between the front end of the left frame 16 and the front end of the right frame 17. The front frame 18 is composed of a front plate 18A and a rear plate (not shown) facing each other in the longitudinal direction, an upper plate 20 closing the upper ends of the front plate 18A and the rear plate, and a lower plate 21 closing the lower ends of the front plate 18A and the rear plate. The left end of the front frame 18 is joined to the front end of the left frame 16 by welding, and the right end of the front frame 18 is joined to the front end of the right frame 17 by welding.

The rear frame 19 connects between the rear end of the left frame 16 and the rear end of the right frame 17. The rear frame 19 is composed of a front plate and a rear plate (both not shown) facing each other in the longitudinal direction, an upper plate 20 closing the upper ends of the front and rear plates, and a lower plate 21 closing the lower ends of the front and rear plates. The left end of the rear frame 19 is joined to the rear end of the left frame 16 by welding, and the right end of the rear frame 19 is joined to the rear end of the right frame 17 by welding.

The upper plate 20 closes the upper ends of the left frame 16, right frame 17, front frame 18, and rear frame 19, and connects between the left frame 16 and the right frame 17. The front side of the upper plate 20 forms a bifurcated branch section 20A that closes the upper ends of the left frame 16 and the right frame 17. The front end of the branch section 20A is connected by a front connection section (not shown), which closes the upper end of the front frame 18.

The lower plate 21 closes the lower ends of the left frame 16, right frame 17, front frame 18, and rear frame 19, and connects between the left frame 16 and the right frame 17. The front side of the lower plate 21 forms a bifurcated branch section 21A similar to the upper plate 20. The front end of the branch section 21A is connected by a front connection section 21B, which closes the lower end of the front frame 18.

The left column 22 and right column 23 are provided at a position closer to the front from the central part in the longitudinal direction of the vehicle body frame 14, facing each other in the lateral direction. These left column 22 and right column 23 are made of a hollow fabricated structure with a mountain shape. The left column 22 protrudes upward from the upper plate 20 constituting the left frame 16, and the right column 23 protrudes upward from the upper plate 20 constituting the right frame 17. At the upper ends of the left column 22 and right column 23, flat mounting flanges (only the mounting flange 22A of the left column 22 is shown) are fixed. The upper cross beam 28 is attached to the mounting flange 22A of the left column 22 and the mounting flange of the right column 23 (not shown).

At the rear end of the main frame 15, left and right rear end brackets 24 are provided. Each rear end bracket 24 protrudes rearward from the rear end of the upper plate 20 constituting the left frame 16 and right frame 17, facing each other in the lateral direction. These left and right rear end brackets 24 pivotally support the bottom part of the vessel 5 via connecting pins 5B.

On the lower side of the intermediate part in the longitudinal direction of the main frame 15, left and right cylinder brackets 25 are provided. These left and right cylinder brackets 25 protrude downward from the lower plate 21 constituting the left frame 16 and right frame 17, facing each other in the lateral direction. At the protruding end side of the cylinder bracket 25, a cylinder support shaft 26 extending in the lateral direction is fixed, and the lower end side of the hoist cylinder 6 is pivotally attached to this cylinder support shaft 26.

The front bumper 27 is integrally fixed to the front side of the front frame 18 constituting the main frame 15 using means such as welding. The front bumper 27 has a U-shaped cross-section formed by the front frame section 27A, left frame section 27B, and right frame section 27C, and is formed as a U-shaped bent frame body as a whole. The front frame section 27A extends in the lateral direction while facing the front frame 18 in the longitudinal direction. The left frame section 27B connects between the left end of the front frame section 27A and the left end of the front frame 18. The right frame section 27C connects between the right end of the front frame section 27A and the right end of the front frame 18.

The upper cross beam 28 is attached to the upper ends of the left column 22 and right column 23 and extends in the lateral direction. The upper cross beam 28 is formed by a rectangular tube having a square cross-section enclosed by the front face 28A, rear face 28B, top face 28C, and bottom face 28D. The bottom face 28D of the upper cross beam 28 is fixed to the mounting flange 22A of the left column 22 and the mounting flange of the right column 23 (not shown) . The left end side of the upper cross beam 28 becomes the cab support section 28E, and the rear side part 9A of the cab 9 is attached to the top face 28C of the cab support section 28E. Thus, the cab support section 28E of the upper cross beam 28 supports the rear side part 9A of the cab 9 from below. Additionally, the part of the upper cross beam 28 located to the right of the cab support section 28E supports the deck 8 from below along with the building 7.

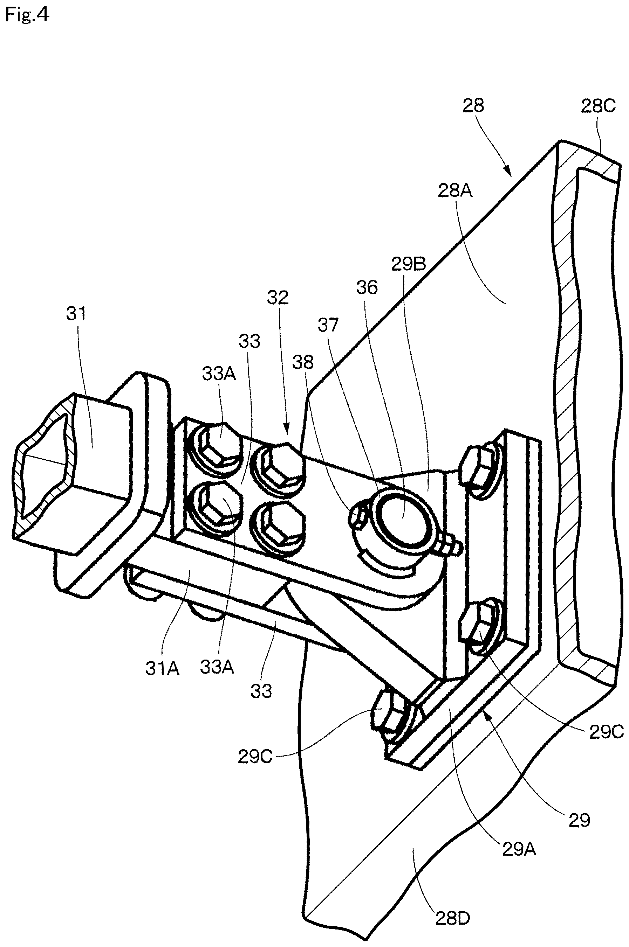

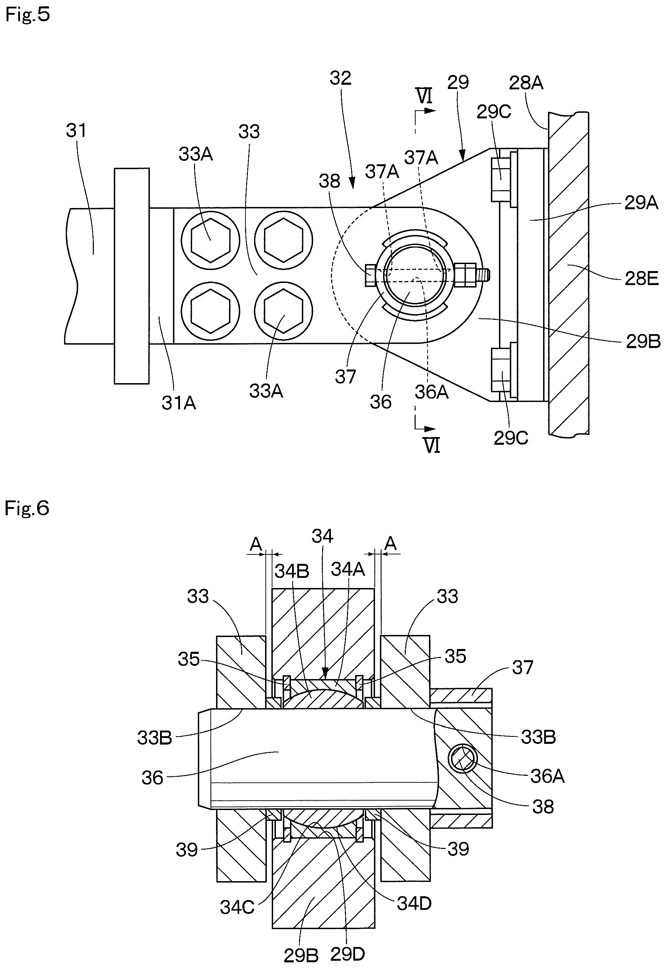

A frame side bracket 29 is provided on the front face 28A of the cab support section 28E. As shown in FIGS. 4 to 6, the frame side bracket 29 has a square base plate 29A and a protruding plate 29B that protrudes forward from the central part in the lateral direction of the base plate 29A. The base plate 29A is fixed to the front face 28A of the upper cross beam 28 using multiple bolts 29C. As shown in FIG. 6, a bearing mounting hole 29D penetrating in the lateral direction is formed in the protruding plate 29B of the frame side bracket 29. The outer ring 34A of the spherical bearing 34, which will be described later, is attached to the bearing mounting hole 29D.

The front support member 30 is provided between the vehicle body frame 14 and the cab 9. The front support member 30 is formed as a trapezoidal frame body having an upper frame section 30A, a left frame section 30B, a right frame section 30C, and an oblique frame section 30D by joining, for example, square tubular pipes using means such as welding. The upper frame section 30A extends in the lateral direction. The left frame section 30B hangs downward from the left end of the upper frame section 30A. The right frame section 30C has a greater length dimension than the left frame section 30B and hangs downward from the right end of the upper frame section 30A. The oblique frame section 30D connects between the lower end of the left frame section 30B and the lower end of the right frame section 30C, extending obliquely downward from the left frame section 30B toward the right frame section 30C.

At the junction of the right frame section 30C and the oblique frame section 30D of the front support member 30 (the lower end of the front support member 30), a square mounting substrate 30E is provided. The mounting substrate 30E is fixed to the side plate 16A on the front end side of the left frame 16 constituting the vehicle body frame 14 using bolts or the like. The front side part 9B of the cab 9 is attached to the upper frame section 30A of the front support member 30. Thus, the front support member 30 supports the front side part 9B of the cab 9 from below.

Here, a left side panel (not shown) constituting the building 7 is attached to the right frame section 30C of the front support member 30, and the front support member 30 constitutes a part (support member) of the building 7. This allows for a reduction in the number of parts required to form the building 7. Additionally, a left fender 12 is fixed to the front face of the upper frame section 30A, left frame section 30B, and right frame section 30C constituting the front support member 30, and an air cleaner 13 is attached to this fender 12.

The reinforcement member 31 is provided between the cab support section 28E of the upper cross beam 28 and the front support member 30, extending in the longitudinal direction. The reinforcement member 31 is formed using a rectangular tube with a square cross-section, and a mounting flange (not shown) is provided on one end side (front end side) in the length direction of the reinforcement member 31. This mounting flange serves as the front connection section between the front end side of the reinforcement member 31 and the front support member 30. The mounting flange is fixed to the upper part (upper end side of the upper frame section 30A or left frame section 30B) of the front support member 30 using fastening members such as bolts.

Meanwhile, the other end side (rear end side) in the length direction of the reinforcement member 31 is connected to the cab support section 28E of the upper cross beam 28 by a rear connection section 32. The rear connection section 32 is composed of the frame side bracket 29 provided on the cab support section 28E, the reinforcement member side bracket 33 provided on the reinforcement member 31, and a connecting pin 36 to be described later.

Two reinforcement member side brackets 33 are provided on the other end side (rear end side) in the length direction of the reinforcement member 31. The reinforcement member side bracket 33 is fixed to the bracket mounting plate 31A, which is integrally provided on the rear end side of the reinforcement member 31, using multiple bolts 33A, facing each other in the lateral direction across the bracket mounting plate 31A. The rear end of the reinforcement member side bracket 33 protrudes rearward from the bracket mounting plate 31A, and a pin insertion hole 33B penetrating in the lateral direction is formed at this protruding end side. The two reinforcement member side brackets 33 sandwich the protruding plate 29B of the frame side bracket 29 from the left and right directions, and are arranged so that the pin insertion holes 33B of the reinforcement member side brackets 33 and the bearing mounting holes 29D of the protruding plate 29B are aligned concentrically. Then, the two reinforcement member side brackets 33 are connected to the protruding plate 29B of the frame side bracket 29 via the connecting pin 36 inserted into the pin insertion hole 33B and the spherical bearing 34.

The spherical bearing 34 is provided at the rear connecting part 32 between the cab support part 28E of the upper cross beam 28 and the reinforcement member 31. As shown in FIG. 6, the spherical bearing 34 is configured to include an outer ring 34A attached to the frame side bracket 29 and an inner ring 34B attached to the connecting pin 36. The inner circumferential surface of the outer ring 34A is a concave spherical surface 34C, and the outer circumferential surface of the inner ring 34B is a convex spherical surface 34D that can slideably contact the concave spherical surface 34C of the outer ring 34A. The outer ring 34A is inserted into the bearing mounting hole 29D formed in the protruding plate 29B of the frame side bracket 29. The outer ring 34A is fixed to the protruding plate 29B in a state where it is sandwiched by two retaining rings 35 for holes on both axial sides.

The connecting pin 36 is inserted into the two reinforcement member side brackets 33 and the inner ring 34B of the spherical bearing 34. Specifically, the axial intermediate part of the connecting pin 36 fits into the inner ring 34B of the spherical bearing 34, and both axial sides of the connecting pin 36 are inserted into the pin insertion holes 33B of the two reinforcement member side brackets 33, respectively. At one end of the connecting pin 36, a pin hole 36A is formed that penetrates in a direction orthogonal to the axial direction through the center of the connecting pin 36.

On the outer surface of one of the two reinforcement member side brackets 33, a cylindrical member 37 is fixed concentrically with the pin insertion hole 33B. The cylindrical member 37 has a through hole 37A formed radially through its center. One end of the connecting pin 36, in which the pin hole 36A is formed, is positioned on the inner circumferential side of the cylindrical member 37 fixed to one of the reinforcement member side brackets 33. Then, a stopper bolt 38 is inserted into the through hole 37A of the cylindrical member 37 and the pin hole 36A of the connecting pin 36. As a result, the connecting pin 36 fitted into the inner ring 34B of the spherical bearing 34 is rotationally secured and axially retained with respect to the reinforcement member side bracket 33.

Between both axial ends of the inner ring 34B constituting the spherical bearing 34 and the two reinforcement member side brackets 33, annular spacers 39 are provided. The spacer 39 is inserted into the connecting pin 36 and adjusts the gap A formed between the protruding plate 29B of the frame side bracket 29 and the reinforcement member side bracket 33. As a result, the reinforcement member side bracket 33 and the frame side bracket 29 are relatively rotatably connected around the inner ring 34B of the spherical bearing 34 within the range of the gap A.

In this way, the cab support part 28E of the upper cross beam 28 supporting the rear side part 9A of the cab 9 and the front support member 30 supporting the front side part 9B of the cab 9 are connected by the reinforcement member 31. This reduces the load acting on the front support member 30 during the travel of the dump truck 1.

Also, the frame side bracket 29 provided on the cab support part 28E and the reinforcement member side bracket 33 provided on the reinforcement member 31 are connected via the connecting pin 36. A spherical bearing 34 is provided between the connecting pin 36 and the frame side bracket 29 (protruding plate 29B). As a result, even if torsional deformation occurs in the vehicle body frame 14 when the dump truck 1 travels over uneven ground, the reinforcement member side bracket 33 and the frame side bracket 29 rotate relative to each other around the inner ring 34B of the spherical bearing 34. This allows the torsional deformation of the vehicle body frame 14 to be absorbed. Therefore, it is possible to suppress the load due to the torsional deformation of the vehicle body frame 14 from acting on the connection part between the cab support part 28E and the reinforcement member 31.

The dump truck 1 according to this embodiment has the above-described configuration, and when transporting crushed stone from a mine or the like using the dump truck 1, the operator on board the cab 9 starts the engine. As a result, the engine drives a hydraulic pump, a generator, etc. (none of which are shown). The power from the generator is supplied to the electric motor of the travel device, and by rotationally driving the rear wheels 4, the dump truck 1 travels to the quarry. Then, crushed stone excavated using a large hydraulic excavator or similar equipment (not shown) is loaded onto the vessel 5 of the dump truck 1, which has stopped at the quarry. The dump truck 1 loaded with crushed stone travels to the collection site, then discharges the crushed stone at the collection site by tilting the vessel 5 using the hoist cylinder 6.

The dump truck 1 travels on rough terrain (uneven ground) in mines and the like, causing the vehicle body frame 14 to undergo torsional deformation. As a result, the reinforcement member 31 connecting the cab support part 28E of the upper cross beam 28 and the front support member 30 is subjected to a load due to the torsional deformation of the vehicle body frame 14. In contrast, in this embodiment, a spherical bearing 34 is provided between the rear connecting part 32 of the cab support part 28E and the reinforcement member 31, that is, between the frame side bracket 29 and the reinforcement member side bracket 33 connected via the connecting pin 36.

Therefore, even if torsional deformation occurs in the vehicle body frame 14, the reinforcement member side bracket 33 and the frame side bracket 29 rotate relative to each other around the inner ring 34B of the spherical bearing 34, allowing the torsional deformation of the vehicle body frame 14 to be absorbed. This suppresses the load due to the torsional deformation of the vehicle body frame 14 from acting on the connection part between the cab support part 28E and the reinforcement member 31. As a result, the dump truck 1 according to this embodiment does not need to increase the rigidity of the vehicle body frame 14 or the strength of the reinforcement member 31 to suppress the torsional deformation of the vehicle body frame 14, and can enhance the support strength of the cab 9 without increasing the weight of the vehicle body.

Thus, in the embodiment, the dump truck 1 includes a vehicle body frame 14 extending in the longitudinal direction with wheels attached, a vessel 5 tiltably provided with respect to the vehicle body frame 14 for loading transported materials, and a cab 9 provided on the vehicle body frame 14 at the front side of the vessel 5 and to define an operating room. In the dump truck 1, the vehicle body frame 14 is provided with a cab support part 28E supporting the rear side part 9A of the cab 9, a front support member 30 disposed between the vehicle body frame 14 and the cab 9 to support the front side part 9B of the cab 9, and a reinforcement member 31 connecting the front support member 30 and the cab support part 28E. And at least one of the connection parts between the cab support part 28E and the reinforcement member 31 (rear connecting part 32), and between the front support member 30 and the reinforcement member 31 (front connecting part), is provided with a spherical bearing 34.

According to this configuration, even if torsional deformation occurs in the vehicle body frame 14 during the travel of the dump truck 1, the reinforcement member side bracket 33 of the reinforcement member 31 connected via the connecting pin 36 and the frame side bracket 29 of the cab support part 28E rotate relative to each other around the inner ring 34B of the spherical bearing 34. This allows the torsional deformation of the vehicle body frame 14 to be absorbed. Therefore, it is possible to suppress the load due to the torsional deformation of the vehicle body frame 14 from acting on the rear connecting part 32 between the cab support part 28E and the reinforcement member 31, and to enhance the support strength of the cab 9 without increasing the weight of the vehicle body 2.

In the embodiment, the cab support part 28E is provided with a frame side bracket 29, and the reinforcement member 31 is provided with a reinforcement member side bracket 33 connected to the frame side bracket 29 via the connecting pin 36. The spherical bearing 34 includes an outer ring 34A with a concave spherical surface 34C attached to the frame side bracket 29, and an inner ring 34B with a convex spherical surface 34D attached to the connecting pin 36 and slidingly contacting the concave spherical surface 34C of the outer ring 34A. According to this configuration, even if torsional deformation occurs in the vehicle body frame 14 during the travel of the dump truck 1, the reinforcement member side bracket 33 and the frame side bracket 29 rotate relative to each other around the inner ring 34B of the spherical bearing 34, allowing the torsional deformation of the vehicle body frame 14 to be absorbed.

In the embodiment, the front support member 30 constitutes a part of the building 7 that defines a machine room at the front side of the vehicle body frame 14. According to this configuration, since the front support member 30 supporting the front side part 9B of the cab 9 also serves as a part of the building 7, the number of parts required to form the building 7 can be reduced.

In the embodiment, an example is illustrated where a spherical bearing 34 is provided at the rear connecting part 32 between the rear end of the reinforcement member 31 and the cab support part 28E. However, the present invention is not limited to this, and a configuration in which a spherical bearing is provided at the front connecting part between the front end of the reinforcement member 31 and the front support member 30 may also be employed. Furthermore, a configuration in which spherical bearings are provided at both the rear connecting part 32 between the rear end of the reinforcement member 31 and the cab support part 28E, and the front connecting part between the front end of the reinforcement member 31 and the front support member 30 may also be employed.

### DESCRIPTION OF REFERENCE NUMERALS

1 : Dump truck
2 : Vehicle body
3 : Front wheel
4 : Rear wheel
5 : vessel
9 : Cab
9A : Rear side part
9B : Front side part
14 : Vehicle body frame
28 : Upper cross beam
28E : Cab support part
29 : Frame side bracket
30 : Front support member
31 : Reinforcement member
32: Rear connection part (connection part)
33: Reinforcement member side bracket
34: Spherical bearing
34A : Outer ring
34B : Inner ring
34C : concave spherical surface
34D : convex spherical surface

## Claims

1. A dump truck comprising:
a vehicle body frame to which wheels are attached and which extends in the longitudinal direction;
a vessel that is tiltably mounted on the vehicle body frame for loading to-be-transported materials and
a cab located at the front side of the vessel and provided on the vehicle body frame to define the operating room, wherein
the vehicle body frame is provided with a cab support part supporting the rear side part of the cab, a front support member disposed between the vehicle body frame and the cab to support the front side part of the cab, and a reinforcement member connecting the front support member and the cab support part, and
a spherical bearing is provided with, at least one of the connection points between the cab support and the reinforcement member and between the front support member and the reinforcement member.

2. The dump truck according to claim 1, wherein
the cab support part is provided with a frame side bracket,
the reinforcement member is provided with a reinforcement member side bracket connected to the frame side bracket via a connecting pin, and
the spherical bearing includes an outer ring having a concave spherical surface attached to the frame side bracket, and an inner ring having a convex spherical surface attached to the connecting pin and slidingly contacting the concave spherical surface of the outer ring.

3. The dump truck according to claim 1, wherein
the front support member constitutes a part of a deck defining a machine room at the front side of the vehicle body frame.
